**Europäisches Patentamt**

**European Patent Office**

**Office européen des brevets**

(19)

(11) Numéro de publication: **0 251 947**
**B1**

(12)

# FASCICULE DE BREVET EUROPEEN

(45) Date de publication du fascicule du brevet:
16.05.90

(21) Numéro de dépôt: **87420175.9**

(22) Date de dépôt: **25.06.87**

(51) Int. Cl.⁵: **A47J 37/04**, A47J 27/04

(54) **Appareil de cuisson à vapeur avec tournebroche.**

(30) Priorité: **27.06.86 FR 8609693**

(43) Date de publication de la demande:
**07.01.88 Bulletin 88/1**

(45) Mention de la délivrance du brevet:
**16.05.90 Bulletin 90/20**

(84) Etats contractants désignés:
**AT BE CH DE ES GB GR IT LI LU NL SE**

(56) Documents cités:
**EP-A- 0 165 187**
**FR-A- 2 203 274**
**US-A- 1 337 122**
**US-A- 2 558 294**
**US-A- 2 888 872**
**US-A- 3 639 725**
**US-A- 4 291 617**

(73) Titulaire: **Jovanovic, Dragomir, 6 Impasse Jean Moulin,**
**F-38000 Pont-de-Claix Isère(FR)**

(72) Inventeur: **Jovanovic, Dragomir, 6 Impasse Jean Moulin,**
**F-38000 Pont-de-Claix Isère(FR)**

(74) Mandataire: **Perrier, Jean-Pierre et al, Cabinet GERMAIN**
**& MAUREAU 12 rue de la République,**
**F-42000 St-Etienne(FR)**

ACTORUM AG

## Description

Cet appareil est du type comprenant, d'une part, une enceinte avec au moins des moyens de chauffage à rayonnement infrarouge, d'autre part, une broche montée libre en rotation dans au moins un palier d'un berceau amovible et coopérant, par l'une de ses extrémités, avec un dispositif d'entrainement en rotation saillant dans l'enceinte.

Bien que fort utilisés pour cuire des volailles diverses, ces appareils de type four ou grill spécialisé, présentent certains inconvénients et, en particulier, conduisent à un temps de cuisson long, favorisent le salissement des parois de l'enceinte par des projections de graisse résultant de la combinaison de la rotation de l'aliment et de l'évacuation des graisses hors de cet aliment sous l'effet de rayonnement et, enfin, entrainent le déssèchement de l'aliment, ce qui nécessite un arrosage fréquent par son jus.

Un premier objet de l'invention est de fournir un dispositif remédiant à ces inconvénients.

Par ailleurs, on connait par le brevet français publié sous le n° 2 564 308 au nom du demandeur, un appareil de cuisson à injection de vapeur à pression atmosphérique comportant une chaudière dont la vapeur est introduite dans un récipient disposé dans l'enceinte de cuisson portée à une température de l'ordre de 100°C. Un tel appareil réduit le temps de cuisson et combine les avantages de la cuisson traditionnelle avec ceux de la cuisson à la vapeur. Toutefois, il ne peut pas être utilisé pour des cuissons à la broche.

Un autre objet de l'invention est de fournir un appareil permettant d'associer, à la cuisson radiative, une cuisson à la vapeur et de réduire le temps de cuisson.

A cet effet, dans l'appareil, selon l'invention, la broche est tubulaire, comporte au moins une perforation radiale débouchant dans sa partie recevant l'aliment et est raccordée, par son extrémité libre et par un raccord tournant, à une buse de distribution de vapeur alimentée par une chaudière produisant de la vapeur à pression atmosphérique.

Grâce à cet agencement, l'aliment, et par exemple la volaille, est cuit simultanément à l'extérieur par l'action du rayonnement infrarouge et à l'intérieur par l'action de la vapeur qui, en se déposant dans la cavité abdominale de la volaille, cède sa chaleur. La vapeur s'échappant de la cavité de la volaille et pénétrant dans l'enceinte, se dépose sur l'extérieur de la volaille dont elle assure aussi la cuisson tout en retardant la carbonisation de sa peau par le rayonnement infrarouge. Lors de la cuisson, la vapeur conserve ainsi le moelleux de la chair et empêche le déssèchement de celle-ci. Par ailleurs, la cuisson à la vapeur à l'intérieur de la volaille, en faisant fondre les graisses, forme un jus qui, en se déposant dans la cavité de la volaille, et par la rotation de celle-ci, arrose en permanence l'intérieur du poulet et éventuellement assure son imprégnation aromatique si des condiments ont été introduits initialement dans cette cavité.

La combinaison de la cuisson par rayonnement infrarouge avec une cuisson à la vapeur permet de réduire le temps de cuisson de l'ordre de 50 % et supprime les projections de graisse, puisque la vapeur assure très rapidement une cuisson superficielle intérieure et extérieure de la volaille, c'est à dire la saisie et empêche ainsi un écoulement abondant des graisses.

Dans une forme d'exécution, l'appareil est du type dans lequel le dispositif d'entrainement en rotation fait saillie de l'une des parois latérales de l'enceinte et peut être rétracté par une commande, extérieure à cette enceinte, pour libérer la broche longitudinale en vue de son déplacement frontal. La buse de distribution de vapeur fait saillie dans l'enceinte à l'opposé du dispositif d'entrainement en rotation, est fixe et comporte une face de contact plane, tandis que, d'une part, l'extrémité libre de la broche est solidaire d'un galet qui roulant dans un palier du berceau, présente une face plane en vis à vis de celle de la buse et que, d'autre part, le dispositif d'entrainement de la broche est associé à des moyens à ressorts aptes à la faire saillir dans l'enceinte et aptes, en sollicitant la broche, à plaquer la face plane du galet contre celle de la buse pour réaliser l'étanchéité de la liaison buse-broche tubulaire.

Cette disposition, forme un raccord tournant simple n'exigeant aucune manipulation, autre que celle consistant à mettre en place la broche dans l'appareil pour assurer le raccordement de la broche tubulaire à la source de vapeur. En raison de l'utilisation d'une vapeur à pression atmosphérique, ce raccord assure une étanchéité très satisfaisante.

D'autres caractéristiques et avantages ressortiront de la description qui suit en référence au dessin schématique annexé représentant à titre d'exemples non limitatifs, une forme d'exécution de cet appareil.

Figure 1 est une vue de face en élévation avec coupe partielle de l'appareil de cuisson selon l'invention, dans le cas de son application à la cuisson de volailles.

Figure 2 est une vue partielle en coupe longitudinale montrant, à échelle agrandie, la broche tubulaire avec ses moyens d'entrainement et d'alimentation en vapeur,

Figure 3 est une vue en coupe transversale montrant, à échelle agrandie, les moyens de liaison d'une fourche d'entrainement de la broche tubulaire,

Figure 4 est une vue en perspective du berceau supportant la broche,

Figure 5 est une vue partielle en coupe longitudinale montrant une variante de réalisation de la broche dans le cas de son application à la cuisson de pièces de viande.

De façon connue, cet appareil de cuisson est composé d'une enceinte 2 avec porte d'accès frontale non représentée. Cette enceinte comporte des moyens de chauffage comprenant au moins, en partie supérieure, un générateur de rayons infrarouges 3 associé ou non à une résistance électrique 4, représentée en partie inférieure. Il est également associé à une broche longitudinale 5 dont l'une des extrémités est munie d'un carré d'entraînement mâle 6, apte à coopérer avec un carré femelle 7 ménagé à l'extrémité d'un dispositif d'entraînement 8. Dans la forme d'exécution représentée, ce dispositif est du type faisant saillie de la paroi latérale 9 de l'enceinte. Plus précisément, le carré femelle 7 est calé à l'extrémité d'un arbre 10 monté libre en rotation dans un palier 11 de la paroi de l'enceinte et relié, par exemple, par un engrenage 12 à un moteur d'entraînement, non représenté. L'arbre 10 est monté coulissant longitudinalement dans le palier 11 et est attelé à des moyens 14 actionnés de l'extérieur de l'enceinte. Ces moyens sont constitués par une fourchette pivotante avec bouton de commande 15 saillant sur la face antérieure d'un caisson 16 juxtaposé à l'enceinte. On conçoit aisément qu'en actionnant le bouton 15, il soit possible de communiquer à l'arbre 10 et au carré 7, un déplacement dans le sens de la flèche 16 pour amener ce carré 7 contre la paroi latérale du four 9 et permettre ainsi l'introduction de la broche dans l'enceinte 2.

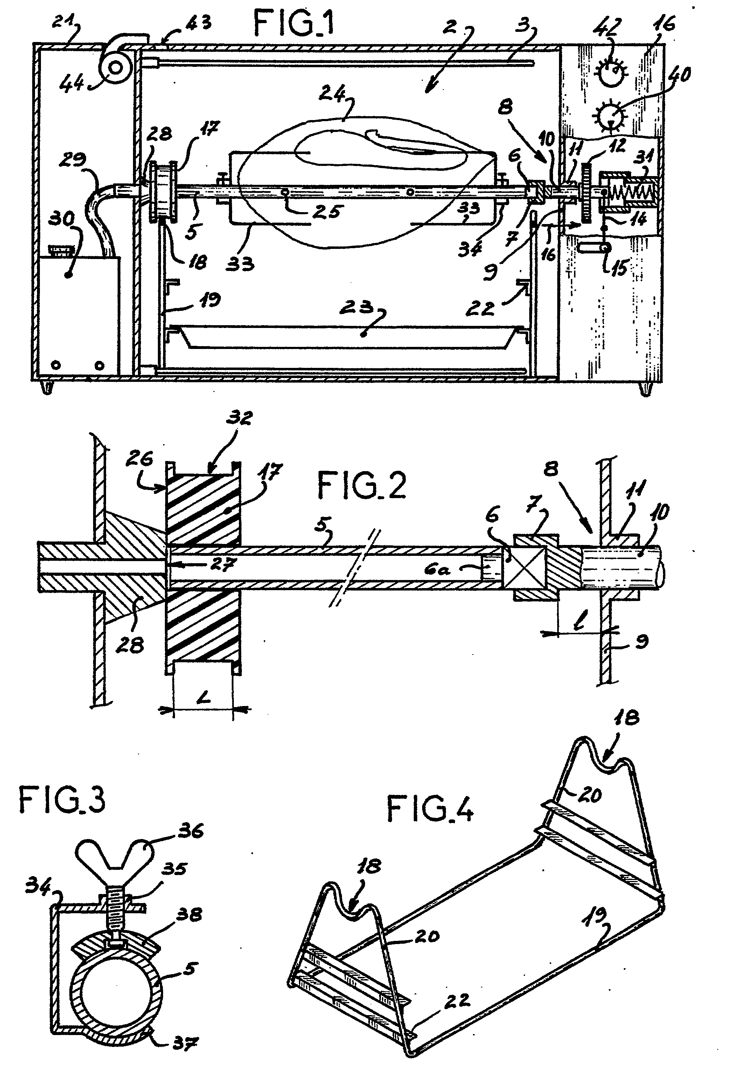

A son autre extrémité, la broche 5 est solidaire d'un galet 17 pouvant pivoter sur un demi palier 18 d'un berceau amovible 19. Comme montré à la figure 4, le berceau 19 comporte, de façon connue, deux demi-paliers 18 dont les montants 20 portent également des réglettes 22 pouvant recevoir, dans l'enceinte 2, un plat 23 de récupération des sauces et des condensats.

Selon l'invention, la broche 5 est tubulaire c'est à dire est creuse et comporte, dans la zone destinée à recevoir l'aliment 24, des perforations 25. La figure 1 montre que ces perforations sont au nombre de deux et sont espacées de manière à pouvoir débiter dans la cavité interne d'une volaille de grandes dimensions, mais aussi de manière à pouvoir injecter de la vapeur dans deux volailles de petites dimensions, tels que des pigeons ou des cailles.

L'extrémité de la broche 5 comportant le carré d'entrainement 6 est obturée par un tenon 6a de ce carré, tandis que son autre extrémité est libre. Cette extrémité libre est liée en rotation, par exemple par collage, au galet 17 réalisé de préférence dans un matériau à faible coefficient de frottement, tel qu'en polytétrafluoréthylène. Ce galet 17 comporte une face diamétrale plane 26 faisant vis à vis à une face diamétrale plane 27 ménagée à l'extrémité d'une buse fixe 28 saillant dans l'enceinte 2 à l'opposé du dispositif d'entrainement 8. Cette buse est fixée sur la paroi latérale correspondante de l'enceinte 2 et est raccordée par un conduit 29, visible à la figure 1, à une chaudière à vapeur instantanée 30, du type décrit dans la demande de brevet français 84.07985 déjà citée. La chaudière est disposée dans un caisson 21 juxtaposé à l'enceinte 2.

La face 26 du galet 17 est plaquée contre la face 27 de la buse 28 par un ressort de compression 31 sollicitant en permanence l'arbre 10 du dispositif d'entrainement 8, dans le sens de la flèche 16, de manière à faire saillir la tête 7 dans la cavité 2. L'effort de ce ressort se transmet par la broche 5 au galet 17 qui est ainsi plaqué automatiquement contre la buse 28, dès que la broche est mise en place dans l'enceinte 2 et que le carré femelle vient en butée sur le carré mâle 6 de la broche.

Il est à noter que le galet 17 est muni d'une gorge interne 32 dont la largeur L est au moins égale et de préférence supérieure au déplacement I du dispositif d'entrainement 8, de manière que les joues de ce galet ne s'opposent pas au contact d'étanchéité en venant en contact avec le demi palier 18 du berceau.

La broche tubulaire 5 peut avoir une section transversale prismatique et, par exemple, carrée, mais peut aussi avoir une section circulaire. Dans ce cas, chacune des fourches 33, assurant la liaison entre la volaille 24 et la broche 5, est associée à un palier 34 à grande surface de contact. Dans une forme d'exécution représentée à la figure 3, chaque palier 34 comporte, à l'opposé d'un alésage fileté 35 pour une vis papillon 36, une surface d'appui 37 de forme semi-circulaire formant berceau pour la broche 5. La vis 36 est associée, par son extrémité, à un patin d'appui semi-circulaire 38, en forme de segment de couronne, apte à venir en contact avec la broche 5 à l'opposé de la surface d'appui 37. Ce patin 38 est monté libre en rotation mais avec liaison en translation sur l'extrémité de la vis 36. La patin 38 et la surface 37 présentent de larges surfaces d'appui qui assurent un excellent blocage de la fourche 36 sur la broche tubulaire 5.

Enfin, la chaudière 30 est associée à un régulateur organisant son débit de manière qu'elle émette des flux discontinus de vapeur et non un flux continu. Ce régulateur peut intervenir suivant la technique du hachage, consistant à interrompre temporairement l'alimentation des moyens de chauffage de l'eau contenue dans la chaudière, ou suivant la technique consistant à réduire temporairement la puissance d'alimentation de ces moyens de chauffage. La durée de fonctionnement de la chaudière est limitée, soit par une minuterie interposée dans son réservoir lorsque ces moyens de chauffage sont associés à un thermostat coupant leur alimentation au-delà d'une certaine température.

Dans le but d'économiser la consommation énergétique, la source de rayonnement infrarouge 3 est associée à des moyens interrompant son alimentation en courant électrique de manière temporaire et cyclique. Le réglage de la fréquence de fonctionnement de la chaudière et de la source de rayonnement infrarouge est assuré par les boutons 40 et 42 visibles à la figure 1.

Pour mettre en place la broche portant la volaille dans l'enceinte 2, il suffit donc de rétracter le carré femelle 7, dans le sens de la flèche 16 de figure 1, puis, dès que le carré 6 de la broche a été introduit dans ce carré femelle et que le galet 17 a été disposé dans son demi-palier 18, de lâcher les moyens de rétraction du dispositif 8. Le ressort 31 entre alors en action et déplace longitudinalement la broche 5 en direction de la buse 28 jusqu'au contact des deux surfaces planes 26-27 constituant joint d'étanchéité tournant. Dès que l'appareil est mis en fonctionnement, et de façon connue, le rayonnement infrarouge assure la cuisson extérieure de la volaille entrainée en rotation sur elle-même par la broche 5. Simultanément, la vapeur pénètre dans la cavité interne de la volaille 24 et assure la cuisson par l'intérieur de celle-ci. La vapeur s'échappant de cette cavité pénètre dans l'enceinte et se dépose sur les surfaces les plus froides, surfaces qui très rapidement ne sont que celles de la volaille 24. En se déposant la chaleur cède son pouvoir calorifique à la chair et à la peau, se condense et tombe par gravité dans le réceptacle 23. La vapeur cuit ainsi régulièrement la peau et la chair en leur apportant une humidité qui s'oppose à leur calcination superficielle par le rayonnement infrarouge et permet ainsi de conserver leur aspect moelleux, plus agréable à la consommation. En fin de cuisson, la vapeur exédentaire s'échappe de l'enceinte 2 par un orifice 43 réalisé dans la paroi supérieure de l'appareil. Cette vapeur est ramenée à une hyrométrie convenable compatible avec l'environnement par mélange, à sa sortie de l'orifice 33, avec un faible débit d'air distribué par un ventilateur 44.

La vapeur favorise également la formation de jus à l'intérieur de la cavité de la volaille et permet ainsi l'arrosage continu et automatique des parois internes de la volaille par ce jus.

Il est à noter que, grâce à l'utilisation, d'une vapeur à pression voisine de la pression atmosphérique, les surfaces planes 26 et 27 du joint tournant assurent une étanchéité très satisfaisante s'opposant à tout échappement de vapeur. Il en résulte que toute la vapeur produite est utilisée pour la cuisson de la volaille, sans aucune perte.

Il est évident que l'invention ne se limite pas à la forme d'exécution qui a été décrite ci dessus à titre d'exemple. C'est ainsi que, dans une autre forme d'exécution, la broche 5 peut également être disposée perpendiculairement à la disposition représentée ici, cas dans lequel son entraînement est assuré par un carré femelle disposé dans la paroi postérieure du four et sa liaison avec la source de vapeur est assurée par un raccord tournant interposé entre son extrémité antérieure et le demi-palier antérieur du berceau.

De même, dans une variante de réalisation relative à l'application de l'appareil à la cuisson simultanée de plusieurs volailles la broche a une longueur lui permettant de recevoir 3 à 5 volailles et comporte dans la zone de positionnement de chaque volaille au moins une et de préférence plusieurs perforations 25 pour le passage de la vapeur.

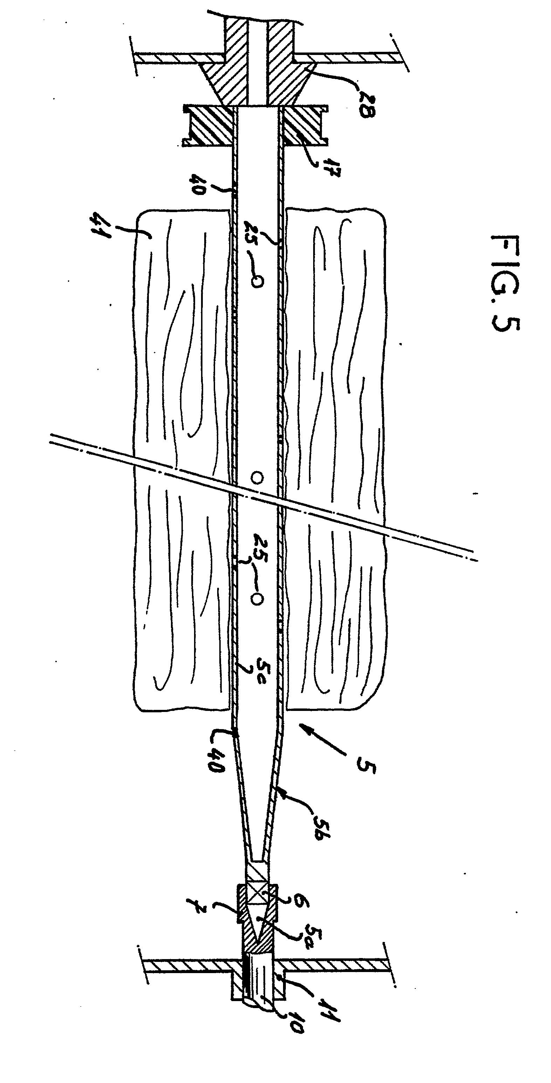

Le tournebroche est également utilisable pour cuire d'autres viandes tels que des rôtis. Dans ce cas et comme montré figure 5, la broche cylindrique 5 comporte dans le prolongement de son extrémité pointue 5a, un cone 5b de faible conicité assurant le raccordement de cette extrémité avec une partie 5c de plus grand diamètre quelle s'étendant sur la plus grande partie de la broche. Cette partie 5c de grand diamètre comporte, des perforations 25 de passage de la vapeur et à chacune de ses extrémités, une perforation 40 d'évacuation des jus. Une telle broche est facilement engagée dans la viande. Au début de la cuisson, la vapeur chauffe la paroi de la broche qui cuit la viande 41 l'entourant. Il se forme ainsi entre la broche et la viande 41 un espace qui reçoit et répartit la vapeur sur toute la surface interne de la viande. La vapeur s'échappant de cet espace et celle s'échappant par les perforations 40 d'évacuation des jus, se dépose sur la face extérieure de la viande et participe à la cuisson de celle-ci.

L'aliment cuit plus rapidement que par les méthodes de cuisson traditionnelle. Il se présente sous la forme d'une couronne pouvant recevoir une garniture dans son logement interne.

## Revendications

1. Appareil de cuisson à vapeur avec tournebroche du type comprenant, d'une part, une enceinte (2) avec au moins des moyens de chauffage à rayonnement infrarouge (3), d'autre part, une broche (5) montée libre en rotation dans au moins un palier 18 d'un berceau amovible (19) et coopérant par l'une de ses extrémités, avec un dispositif (8) d'entraînement en rotation saillant dans l'enceinte (2) caractérisé en ce que sa broche (5) est tubulaire, comporte au moins une perforation radiale (25), débouchant dans sa partie recevant l'aliment, et est raccordée, par son extrémité libre et par un raccord tournant (26-27), à une buse (28) de distribution de vapeur alimentée par une chaudière (30) produisant de la vapeur à pression atmosphérique.

2. Appareil selon la revendication 1 caractérisé en ce que, lorsqu'il comporte un dispositif (8) d'entraînement en rotation faisant saillie de l'une des parois latérales de l'enceinte (2) et pouvant être rétracté par une commande (15), extérieure à cette enceinte, pour libérer la broche longitudinale en vue de son déplacement frontal, la buse (28) fait saillie dans l'enceinte à l'opposé du dispositif (18) d'entrainement en rotation, est fixe et comporte une face de contact plane (27) tandis que, d'une part, l'extrémité libre de la broche (5) est solidaire d'un galet (17) qui, roulant dans un palier (18) du berceau (19), comporte une face plane (26), en vis à vis de celle (27) et que, d'autre part, le dispositif (8) d'entrainement de la broche est associé à des moyens à ressort (31), aptes à la faire saillir dans l'enceinte et aptes en sollicitant la broche (5), à plaquer la face plane (26) du galet contre celle (27) de la buse pur réaliser l'étanchéité de la liaison buse-broche tubulaire.

3. Appareil selon l'ensemble des revendications 1 et 2 caractérisé en ce que la broche tubulaire (5) est cylindrique.

4. Appareil selon la revendication 1 et l'une quelconque des revendications 2 à 3 caractérisé en ce que les moyens (3) de chauffage par rayonnement infrarouge et la chaudière (30) de production de vapeur sont associés à des moyens interrompant cycliquement leur alimentation électrique suivant des cycles réglables.

5. Appareil selon la revendication I et l'une quelconque des revendications 2 à 4 caractérisé en ce qu'il comporte un ventilateur (44) dont l'orifice de sortie (43) est disposé au voisinage d'une ouverture (43) ménagée dans l'enceinté (2) pour l'échappement de la vapeur excédentaire.

6. Appareil selon la revendication 1 et l'une quelconque des revendications 2 à 5 caractérisé en ce que, pour la cuisson de viande, sa broche tubulaire (5) comporte, dans le prolongement de son extrémité pointue (5a), un cone (5b) de faible conicité assurant le raccordement de cette extrémité (5a) avec une partie (5c) qui, de plus grand diamètre qu'elle et s'étendant sur la plus grande partie de la longueur de la broche, comporte, des perforations (25) de passage de vapeur et, à chacune de ses extrémités, une perforation (40) d'évacuation des jus.

## Claims

1. Steam cooling apparatus with a rotating spit, of the type including, on the one hand, an enclosed space (2) with at least an infra-red heating means (3), on the other hand, a spit (5) mounted free for rotation in at least one bearing (18) of a removable cradle (19) and cooperating by one of its ends with a rotational driving device (8) projecting into the space (2), characterised in that its spit (5) is tabular, has at least one radial perforation (25) opening into its portion receiving the food, and is connected, by its free end and by a rotary connection (26–27), to a nozzle (28) for distributing steam supplied by a boiler (30) producing steam at atmospheric pressure.

2. An apparatus according to claim 1, characterised in that when it has a rotational driving device (8) projecting from one of the lateral walls of the space (2) and retractable by a control (15) external to this space for freeing the longitudinal spit with a view to its frontal movement, the nozzle (28) projects into the space opposite to the rotational driving device (18), is fixed and has a flat contact face (27), whilst, on the one hand, the free end of the spit (5) is secured to a roller (17) which, rotating in a bearing (18) of the cradle (19), has a flat face (26) opposed to the face (27) and that, on the other hand, the device (8) for driving the spit is associated with spring means (31), adapted to cause the device to project into the space and adapted, by acting on the spit (5), to engage the flat face (26) of the roller against the face (27) of the nozzle to effect the sealing of the nozzle-tubular spit connection.

3. An apparatus according to claims 1 and 2 taken together, characterised in that the tubular spit (5) is cylindrical.

4. An apparatus according to claim 1 and any one of claims 2 and 3, characterised in that the infrared heating means (3) and the steam procuding boiler (30) are associated with means for cylindrical switching off their electrical supply in adjustable cycles.

5. An apparatus according to claim 1 and any one of claims 2 to 4, characterised in that it has a ventilator (44) of which the outlet orifice (43) is disposed in the region of an opening (43) formed in the space (2) for exhausting of excess steam.

6. An apparatus according to Claim 1 and any one of Claims 2 to 5, characterised in that, for cooking meat, its tubular spit (5) has, in the extension of its pointed end (5a), a sligthly tapering cone (5b) which connects this end (5a) with a portion (5c), which, being of greater diameter than the end (5a) and extending over the greater part of the length of the spit, has perforations (25) for the passage of steam and, at each of its ends, a perforation (40) for draining juices.

## Patentansprüche

1. Dampfkochgerät mit Grillspieß, umfassend einerseits einen umschlossenen Raum (2) mit wenigstens einer Infrarot-Heizeinrichtung (3) und andererseits eine Welle (5), die frei drehbar in wenigstens einem Lager (18) eines unbeweglichen Traggestells (19) angeordnet ist und mit einem ihrer Enden mit einer in den umschlossenen Raum (2) hineinragenden Drehmitnahmeeinrichtung (8) zusammenwirkt, dadurch gekennzeichnet, daß seine Welle (5) röhrenförmig ist, mit wenigstens einer in ihrem die Nahrungsmittel aufnehmenden Abschnitt mündenden radialen Perforation (25) versehen ist und über ihr freies Ende sowie über eine Drehdurchführungsverbindung (26, 27) mit einer Dampfverteilerdüse (28) verbunden ist, die von einem Dampfkessel (30) gespeist wird, welcher Dampf bei Atmosphärendruck erzeugt.

2. Gerät nach Anspruch 1, dadurch gekennzeichnet, daß wenn es eine über eine der Seitenwände des umschlossenen Raums (2) vorspringende Drehmitnahmeeinrichtung (8) aufweist, die mittels einer an der Außenseite des umschlossenen Raums angebrachten Betätigungseinrichtung (15) zurückziehbar ist, um die langgestreckte Welle im Hinblick auf ihre frontale Bewegung freizugeben, die Düse (28) gegenüber der Drehmitnahmeeinrichtung (18) in den umschlossenen Raum hineinragt, dort befestigt ist und eine ebene Kontaktfläche (27) aufweist, während einerseits das freie Ende der Welle (5) fest mit einer Rolle (17) verbunden ist, die, in einem Lager (18) des Traggestells (19) rollend, eine ebene Kontaktfläche (26) gegenüber der ebenen Fläche (27) der Düse (28) aufweist, während andererseits die Drehmitnahmeeinrichtung (8) der Welle mit wenigstens einer Federeinrichtung (31) verbunden ist, die geeignet ist, das Hineinragen der Drehmitnahmeeinrichtung (8) in den umschlossenen Raum zu bewirken sowie die Welle (5) zu unterstützen, die ebene Fläche (26) der Rolle gegen die ebene Fläche (27) der Düse zu pressen, um die Dichtigkeit der Verbindung Düse – röhrenförmige Welle zu bewirken.

3. Gerät nach den beiden Ansprüchen 1 und 2, dadurch gekennzeichnet, daß die röhrenförmige Welle (5) zylindrisch ist.

4. Gerät nach dem Anspruch 1 und einem der Ansprüche 2 und 3, dadurch gekennzeichnet, daß die Infrarot-Heizeinrichtung (3) und der Dampfkessel (30) mit Einrichtungen verbunden sind, die ihre elektrische Versorgung gemäß eines einstellbaren Zyklusses periodisch unterbrechen.

5. Gerät nach Anspruch 1 und einem der Ansprüche 2–4, dadurch gekennzeichnet, daß es mit einem Ventilator (44) versehen ist, dessen Ausgangsöffnung (43) in Nachbarschaft einer in dem umschlossenen Raum (2) für den Auslaß des überschüssigen Dampfes angebrachten Öffnung (43) angeordnet ist.

6. Gerät nach Anspruch 1 und einem der Ansprüche 2–5, dadurch gekennzeichnet, daß für das Kochen von Fleisch seine röhrenförmige Welle (5) in der Verlängerung seines spitz zulaufenden Endes (5a) einen schwach kegelförmigen Konus (5b) aufweist, der die Verbindung dieses Endes (5a) mit einem Teil (5c) sicherstellt, das einen größeren Durchmesser als dieses Ende (5a) besitzt und das sich auf dem größeren Längenabschnitt der Welle erstreckt sowie Perforationen (25) für den Dampfdurchlaß und an jedem seiner Enden eine Perforation (40) für den Abfluß des Bratensaftes umfaßt.

EP 0 251 947 B1

FIG.1

FIG.2

FIG.3

FIG.4

FIG. 5